# EUROPEAN PATENT SPECIFICATION

(11) **EP 4 183 595 B1**
(45) Date of publication and mention of the grant of the patent: **19.02.2025**
(21) Application number: 22202800.3
(22) Date of filing: 20.10.2022
(51) Int. Cl.: B60C 1/00, B60C 11/00, B60C 13/00, B60C 9/18, B60C 9/20, B60C 11/01

(54) **A TIRE HAVING AN IMPROVED SHOULDER DESIGN**
REIFEN MIT VERBESSERTEM SCHULTERDESIGN
PNEU AYANT UNE CONCEPTION D'ÉPAULEMENT AMÉLIORÉE

(30) Priority: 19.11.2021 US 202163264297 P
(43) Date of publication of application: 24.05.2023
(73) Proprietor: The Goodyear Tire & Rubber Company, Akron, OH 44316 (US)
(72) Inventor: BAUMANN, Thomas Egon, D-63743 Aschaffenburg (DE); GOERL, Roman, D-63785 Obernburg am Main (DE); ATA, Selcuk, D-63579 Freigericht (DE); VOGEL, Viktor Pranas, D-64665 Alsbach-Haehnlein (DE); FEHL, Helmut Wolfgang, D-36381 Schluechtern (DE); BILMEZ, Umit, D-63452 Hanau (DE)
(74) Representative: Kutsch, Bernd

(56) References cited:
- EP-A1- 0 662 396
- EP-A2- 0 104 133
- EP-A2- 1 221 385
- WO-A1-2018/115722
- WO-A1-2021/111083
- DE-A1- 102010 061 287
- GB-A- 2 077 671
- JP-A- 2003 312 210

## Description

### Field of the Invention

The present invention relates to a tire, in particular a pneumatic tire.

### Background of the Invention

High performance tires have superior driving properties compared to conventional tires. However, apart from advanced driving performance, it is also important that such tires are sufficiently endurant. In particular, they should withstand forces and heat over long periods of time and in some cases also under high loads.

While many improvements have been made in this area over the past decades, significant room for improving tire endurance properties remains.

EP 0 662 396 A1 describes a tire in accordance with the preamble of claim 1.

Tires having a tread, sidewalls, a carcass and at least two belt layers with the tread having an axially outer edge portion radially covering an axially outermost edge of at least one of the belt layers and having a rubber composition different from the rubber composition of a neighboring portion of the tread and with the neighboring portion being adapted to be ground-contacting and with a sidewall at least partially covering and contacting an axially outer surface of the axially outer edge portion of the tread are known from WO 2021/111083 A1, EP 0 104 133 A2, JP 2003 312 210 A, GB 2 077 671 A and DE 10 2010 061 287 A1.

### Summary of the Invention

The invention relates to a tire in accordance with claim 1.

Dependent claims refer to preferred embodiments of the invention.

In a preferred aspect of the invention, the sidewall tapers in its radially outermost portion and covers the majority of the axially outer surface of the axially outer edge portion.

In a preferred aspect of the invention, the sidewall contacts with its radially outermost portion the neighboring portion of the tread.

In a preferred aspect of the invention, a radially outer surface of the axially outer edge portion extends essentially in an axial direction.

In a preferred aspect of the invention, an axially innermost end of the axially outer edge portion is situated between the axially outermost edge of the radially inner belt layer and the axially outermost edge of the radially outer belt layer.

One object of the present invention is to provide an advanced tire with improved endurance properties.

Another object of the present invention is to provide an advanced tire with a sidewall over tread design or construction, having advanced endurance properties under conditions where the tire is used on a vehicle which is driven at high speeds.

Another object of the present invention is to provide an advanced tire with a reduced heat built-up in the belt edge area of the tire.

Another object of the present invention is to provide a high performance (HP), ultra-high performance (UHP), ultra-ultra-high performance (UUHP) or race tire with advanced endurance properties.

In a first aspect of the invention, tire is disclosed comprising a tread, two sidewalls, a carcass and at least two belts (or, in other words, belt plies) arranged radially between the carcass and the tread, preferably in a crown area of the tire. The tread has at least one axially outer edge portion (or axially outer portion) radially covering the axially outermost edge of at least one of the belts and comprising a different rubber composition than a neighboring portion of the tread, wherein the neighboring portion of the tread is intended to contact the ground (or road) when driving. Moreover, one of the sidewalls (or a respective sidewall) at least partially covers and contacts the axially outer surface of the axially outer edge portion of the tread.

In such a design, the sidewall covers the tread, which is also sometimes referred to as a sidewall over tread design or construction. The design according to the present invention is of particular advantage as the axially outer edge portion of the tread covers at least one axially outer belt edge, in particular with a rubber compound different than the rubber compound in an adjacent portion of the tread which helps to render the tire more robust.

In one embodiment, the axially outer edge portion extends axially over 1% to 20%, preferably over 2% to 15%, of the total axial width of the tread. The axial width of the tread is determined herein in the tire in a cured state, wherein the total axial width of a tread is measured in a cross-section of the tire, perpendicular to the equatorial plane of the tire.

In another preferred embodiment, the axially outer edge portion of the tread has an essentially triangular cross-section or shape (having three sides) in a plane perpendicular to the equatorial plane of the tire. Preferably, a first side of the axially outer edge portion contacts the neighboring portion of the tread, a second side covers at least one belt edge (preferably the axially outermost belt edge of the at least two belts), and/or a third side contacts (directly) the sidewall. In other words, the sidewall touches the axially outer edge portion of the tread and/or is cured to it. The axially outer edge portion touches also directly the neighboring portion of the tread. Typically, the axially outer edge portion has been extruded together with the remaining tread, in particular extruded together with the neighboring portion of the tread.

The axially outer edge portion may help to provide on the one hand a good connection of the sidewall touching the tread, and may help on the other hand to cover the belt edge.

In another preferred embodiment, the second side covers the belt edge and one or more of a portion of the carcass and at least one overlay covering the belt edge. The belt edge may be covered also by two overlays or one or more overlay strips. Such strips may be circumferentially and/or spirally wound about the belts. Thus, the axially outer edge portion may protect the belt edges.

In still another preferred embodiment, the neighboring portion (directly) contacts the axially outer edge portion.

In yet another preferred embodiment, the neighboring portion is ground-contacting or intended to contact the ground or the road when the tire is one or more of cured, new and unworn.

In still another preferred embodiment, the axially outer edge portion comprises or consists of a first rubber composition and the neighboring portion (preferably directly contacting the axially outer edge portion) comprises or consists of a second rubber composition, wherein the second rubber composition is different from the first rubber composition.

In still another preferred embodiment, the axially outer edge portion comprises or consists of a first rubber composition and the neighboring portion (preferably directly contacting the axially outer edge portion) comprises or consists of a second rubber composition and the sidewall comprises or consists of a third rubber composition, wherein all three rubber compositions are preferably different from one another.

The axially outer edge portion comprises at least 25 phr, preferably at least 30 phr, or even more preferably at least 35 phr of a polybutadiene rubber, at least 30 phr, preferably at least 35 phr, of polyisoprene rubber (e.g., a synthetic polyisoprene rubber and/or natural rubber) and at least 20 phr of carbon black, preferably at least 30 phr of carbon black, or even more preferably at least 40 phr carbon black. Preferably, the axially outer edge portion has less than 90 phr of filler. In other words, the axially outer edge portion comprises or consists of a rubber composition having the above composition.

In still another preferred embodiment, the sidewall comprises a rubber composition comprising at least 30 phr, preferably at least 35 phr, of a polybutadiene rubber, at least 30 phr, preferably at least 35 phr, of polyisoprene rubber (e.g., a synthetic polyisoprene rubber and/or natural rubber), and at least 20 phr of carbon black, preferably at least 30 phr of carbon black. Preferably, the rubber composition has less than 90 phr of filler. Therefore, the axially outer edge portion of the tread has a compositional similarity with the sidewall (or in other words sidewall component) composition. Preferably, despite similarity, the sidewall has nevertheless a different rubber composition than the axially outer edge portion.

In still another preferred embodiment, the rubber composition of the sidewall and/or the axially outer edge portion comprises one or more tackifying resins, preferably selected from the list of phenol formaldehyde resins and alkylphenol acetylene resins.

In still another preferred embodiment, the neighboring portion is a tread cap or tread cap portion.

In still another preferred embodiment, the neighboring portion is a tread cap portion contacting the ground or the road when driving. In other words, it is a neighboring tread cap portion.

In still another preferred embodiment, the neighboring portion comprises at least one (or a) rubber composition comprising at least 90 phr of at one least a diene-based elastomer and at least 100 phr of filler. Preferably, the filler is within the range of 100 phr to 250 phr. In another embodiment, said filler comprises at least 40 phr of silica, preferably at least 90 phr of silica. Preferably, the rubber composition comprises 100 phr of at least one diene based elastomer. In an example, the rubber composition comprises 30 phr to 100 phr (or from 40 phr to 80 phr) of a hydrocarbon resin, preferably selected from the list of aliphatic (C5) resins, aromatic (C9) resins, cyclopentadiene resins, dicyclopentadiene resins, coumarone indene resins, terpene resins, styrene/α-methyl-styrene resins, terpene phenol resins, or combinations of those. Preferably the rubber composition comprises predominantly at least one styrene-butadiene rubber, such as at least one solution polymerized styrene-butadiene rubber. In another embodiment, said diene-based elastomer comprises at least 50 phr of styrene butadiene rubber. In general, the diene-based elastomers, such as the styrene-butadiene rubber or the solution polymerized-styrene butadiene rubber are preferably functionalized for the coupling to silica.

In another preferred embodiment, the rubber composition of the neighboring portion comprises at least 150 phr of a filler comprising at least 90 phr of carbon black, preferably more than 100 phr of carbon black, as e.g. useful in UUHP or race tires.

In still another preferred embodiment, the axially outer edge portion comprises or consists of a first rubber composition and the neighboring portion (preferably directly contacting the axially outer edge portion) comprises or consists of a second rubber composition, wherein the second rubber composition is different from the first rubber composition.

The rubber composition of the axially outer edge portion has an elongation at break of at least 500%, preferably at least 550%, or even more preferably at least 600%, and an elongation at break which is at least 10% higher than the elongation at break of the neighboring portion of the tread. Elongation at break is determined by a ring sample test based on ASTM D412 or equivalent, wherein percentages are percentages of elongation. Such a relatively high elongation at break helps to provide a flexible area above the belt edges. It is also possible that the elongation at break is at most 800% or at most 700%.

In another preferred embodiment, the rubber composition of the sidewall has at least one of (a) an elongation at break of at least 500% (preferably of at least 550%), and (b) an elongation at break which is at least 5% higher (preferably 10% higher) than the elongation at break of the neighboring portion of the tread. 10% higher shall mean herein 10% higher relative to the (absolute) value of the elongation at break of the neighboring portion of the tread.

In still another preferred embodiment, the rubber composition of the sidewall and/or the axially outer edge portion have each a shore A hardness of less than 60, preferably less than 55 or even more preferably of less than 50. Shore A hardness is determined according to ASTM D2240 or equivalent herein.

In yet another preferred embodiment, the shore A hardness of the rubber composition of the sidewall and/or the axially outer edge portion is within the range of 40 to 60, preferably within a range of 45 to 55.

In other words, the hardness of the rubber composition of the sidewall and the axially outer edge portion can be similarly low. In contrast a typical tread rubber compound would have a higher shore A hardness.

In another preferred embodiment, the axially outer edge portion is one or more of: an axially outer cushion portion, an axially outer damping portion, an axially outer wedge-shaped portion, and an axially outer triangular portion. In addition or alternatively, it may be an axially outermost portion of the tread.

In another preferred embodiment, the shore A hardness of the rubber composition of the neighboring portion of the tread is at least 55, preferably at least 60, or within a range of 55 to 75, preferably within a range of 60 and 75.

In another preferred embodiment, the shore A hardness of the rubber composition of the axially outer edge portion is at least 5%, preferably at least 10%, or even more preferably at least 20 %, lower than the shore A hardness of the neighboring tread portion.

In another preferred embodiment, the storage modulus G' of the rubber composition of the axially outer edge portion is within a range of 700 to 1700 kPa, preferably from 750 to 1500 kPa.

The storage modulus G' is determined with a RPA 2000^{™} Rubber Process Analyzer of the company Alpha Technologies, based on ASTM D5289 (or equivalent) at 1% strain, 1 Hz and 100°C. The storage modulus can be considered as a stiffness indicator.

In another preferred embodiment, the storage modulus G' of the rubber composition of the axially outer edge portion is at least 5% lower, preferably at least 10% lower than the storage modulus G' of the rubber composition of the neighboring tread portion.

In another preferred embodiment, the storage modulus G' of the rubber composition of the neighboring tread portion is within a range of 2000 to 10000 kPa, preferably from 2500 to 8000 kPa, or even more preferably from 3000 kPa to 7500 kPa.

Elongation at break, Shore A hardness and G' are measured on cured rubber compositions, in particular of the cured tire.

In still another preferred embodiment, the tire comprises one axially outer edge portion at each axial side of the tread (in other words two such portions in total), wherein optionally each axially outer edge portion is covered by a respective sidewall.

In still another preferred embodiment, the axially outer edge portion and/or the neighboring tread portion are free of a fabric or wire reinforcement.

In still another preferred embodiment, the axially outer edge portions do not touch each other and/or extend together over less than 30%, preferably less than 20%, or even less than 15%, of the total axial width of the tread. For example, the outer portions are not part of a tread base layer extending (e.g., radially below the tread) over the full width of the tread.

In still another preferred embodiment, the belt edge is covered by one of (i) one or more overlays (or, in other words, an overlay ply) and (ii) one or more overlay strips. Overlays and overlay strips as such are known to the person skilled in the tire art. Such overlays or particularly overlay strips can be of advantage in higher performance tires.

In yet another preferred embodiment, the sidewall extends over at least 80% of the radial height of the axially outer edge portion. Thus, the sidewall covers the side of the tread, in particular the axially outer edge portion of the tread. In many other constructions, a radially outer end of the sidewall, or in other words sidewall component or sidewall rubber component, is arranged or clamped between the tread and the carcass (sometimes referred to as sidewall under tread).

In still another preferred embodiment, the axially outer edge portion covers i) at least an axially outer edge of a radially inner belt, ii) an axially outermost portion of the overlay or overlay strip and optionally iii) a carcass portion axially outwards the axially outermost portion of the overlay or overlay strip. In other words, the axially outermost portion covers and/or bridges the area between the axial end of the belt, axial end of the overlay or overlay strips and the carcass.

In yet another preferred embodiment, the axially outer edge portion extends to a radially outermost position which is radially below the radially innermost surface of the tread in the equatorial plane of the tire (or in other words at the centerline of the tire).

In still another preferred embodiment, the axially outer edge portion tapers in an axially outer and radially inner direction.

In still another preferred embodiment, the neighboring portion (directly) contacts the axially outer edge portion.

The axially outer edge portion, the neighboring portion, the tread, the sidewalls, the belts, the overlays, the carcass, and other tire components typically also extend in the circumferential direction (around the tire).

In yet another preferred embodiment, the sidewall tapers in its radially outermost portion and/or covers the majority of the axially outer edge portion. Preferably, the sidewall covers the axially outer edge portion such that it is not visible on the outer surface of the tire

In still another preferred embodiment, the sidewall touches or contacts with its radially outermost portion the neighboring portion of the tread. Preferably, the neighboring portion of the tread contacts the road when driving.

In another preferred embodiment, the axially outer edge portion is (covered) below the outer surface of the tire, preferably in a shoulder portion of the tire. In particular, it is not intended to contact the road upon driving or tire wear. It is preferably (e.g. radially) covered by the sidewall and optionally also the neighboring portion of the tread.

In still another preferred embodiment, a radially outer side or surface of the axially outer edge portion extends essentially in or along the axial direction. Essentially includes herein angles of +/- 10°, preferably +/- 5°, with the same direction.

In yet another preferred embodiment, the axially outer edge portion covers the axially outermost edge of the radially inner belt. An axially innermost end of the axially outer edge portion is provided between the axially outermost edge of the radially inner belt and the axially outermost edge of the radially outer belt.

In still another preferred embodiment, the tire is a pneumatic tire or a non-pneumatic tire. Preferably, it is a pneumatic tire.

In still another preferred embodiment, the tire may be a radial tire or a bias tire. Preferably, the tire is a radial tire.

In yet another preferred embodiment, the tire is a tire having a speed symbol of "V", "W" or "Y", preferably "W" or "Y". Such speed symbols are depicted on at least one sidewall of the tire.

In yet another preferred embodiment, the tire is a summer tire.

In another preferred embodiment, one or more rubber compositions mentioned herein may include at least one and/or one additional diene-based rubber. Representative synthetic polymers may be the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g. acrolein, methyl isopropenyl ketone and vinylethyl ether. Specific examples of synthetic rubbers include neoprene (polychloroprene), polybutadiene (including cis 1,4-polybutadiene), polyisoprene (including cis 1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. Preferred rubber or elastomers may be in general natural rubber, synthetic polyisoprene, polybutadiene and SBR including SSBR.

In an embodiment, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers, and emulsion polymerization prepared butadiene/acrylonitrile copolymers.

In another embodiment, an emulsion polymerization derived styrene-butadiene rubber (ESBR) might be used having a styrene content of 20 to 28 percent bound styrene or, for some applications, an ESBR having a medium to relatively high bound styrene content, namely, a bound styrene content of 30 to 45 percent. In many cases the ESBR will have a bound styrene content which is within the range of 26 to 31 percent. By emulsion polymerization prepared ESBR, it may be meant that styrene and 1,3-butadiene are copolymerized as an aqueous emulsionThe bound styrene content can vary, for example, from 5 to 50 percent. In one aspect, the ESBR may also contain acrylonitrile to form a terpolymer rubber, as ESBAR, in amounts, for example, of 2 to 30 weight percent bound acrylonitrile in the terpolymer. Emulsion polymerization prepared styrene/butadiene/acrylonitrile copolymer rubbers containing 2 to 40 weight percent bound acrylonitrile in the copolymer may also be contemplated as diene-based rubbers.

In another embodiment, solution polymerization prepared SBR (SSBR) is used. Such an SSBR may for instance have a bound styrene content in a range of 5 to 50 percent, preferably 9 to 36 percent, and most preferably 26 to 31 percent. The SSBR can be conveniently prepared, for example, by anionic polymerization in an inert organic solvent. More specifically, the SSBR can be synthesized by copolymerizing styrene and a 1,3-butadiene monomer in a hydrocarbon solvent utilizing an organo lithium compound as the initiator. In still another embodiment, the solution styrene butadiene rubber is a tin-coupled polymer. In still another embodiment, the SSBR is functionalized for improved compatibility with silica. In addition, or alternatively, the SSBR is thio-functionalized. This helps to improve stiffness of the compound and/or its hysteresis behavior. Thus, for instance, the SSBR may be a thio-functionalized, tin-coupled solution polymerized copolymer of butadiene and styrene.

In one embodiment, a synthetic or natural polyisoprene rubber is used. Synthetic cis-1,4-polyisoprene and natural rubber are as such well known to those having skill in the rubber art. In particular, the cis 1 ,4-microstructure content may be at least 90% and is typically at least 95% or even higher.

In one embodiment, cis-1,4-polybutadiene rubber (BR or PBD) is used. Suitable polybutadiene rubbers may be prepared, for example, by organic solution polymerization of 1,3-butadiene. The BR may be conveniently characterized, for example, by having at least a 90 percent cis-1,4-microstructure content ("high cis" content) and a glass transition temperature (Tg) in a range of from -95°C to -110°C. Suitable polybutadiene rubbers are available commercially, such as Budene^{®} 1207, Budene^{®} 1208, Budene^{®} 1223, or Budene^{®} 1280 from The Goodyear Tire & Rubber Company. These high cis-1,4-polybutadiene rubbers can for instance be synthesized utilizing nickel catalyst systems which include a mixture of (1) an organonickel compound, (2) an organoaluminum compound, and (3) a fluorine containing compound as described in United States Patent 5,698,643 and United States Patent 5,451,646, which are incorporated herein by reference.

A glass transition temperature, or Tg, of an elastomer or elastomer/rubber composition, where referred to herein, represents the glass transition temperature(s) of the respective elastomer or elastomer composition in its uncured state or possibly a cured state in the case of an elastomer composition.

Tg is determined by the midpoint or inflection point of the step observed in association with the glass transition, as measured using a differential scanning calorimeter (DSC) at a temperature change rate of 10°C per minute, according to ASTM D3418.

The term "phr" as used herein, and according to conventional practice, refers to "parts by weight of a respective material per 100 parts by weight of rubber, or elastomer". In general, using this convention, a rubber composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber. In an example, the composition may further comprise from 1 phr to 10 phr, optionally from 1 phr to 5 phr, of one or more additional diene-based rubbers, such as SBR, SSBR, ESBR, PBD/BR, NR and/or synthetic polyisoprene. In another example, the composition may include less than 5, preferably less than 3, phr of an additional diene-based rubber or be also essentially free of such an additional diene-based rubber. The terms "compound" and "composition" and "formulation" may be used herein interchangeably, unless indicated otherwise.

In a preferred embodiment, the rubber composition may also include one or more additional oils, in particular (additional) processing oils. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils may include various oils as are known in the art, including aromatic, paraffinic, naphthenic, vegetable oils, and low PCA oils, such as MES, TDAE, SRAE and heavy naphthenic oils. Suitable low PCA oils may include those having a polycyclic aromatic (PCA) content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom. Some representative examples of (non-aminated and non-epoxidized) vegetable oils that can be used include soybean oil, sunflower oil, canola (rapeseed) oil, corn oil, coconut oil, cottonseed oil, olive oil, palm oil, peanut oil, and safflower oil.

In a preferred embodiment, the rubber composition includes silica. Commonly employed siliceous pigments which may be used in the rubber compound include for instance conventional pyrogenic and precipitated siliceous pigments (silica). In one embodiment, precipitated silica is used. The conventional siliceous pigments may be precipitated silicas such as, for example, those obtained by the acidification of a soluble silicate, e.g., sodium silicate. Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 50 to 300 square meters per gram. The BET surface area is determined herein according to ASTM D5604 - 96 or equivalent. The conventional silica may also be characterized by having a dibutylphthalate (DBP) absorption value in a range of 100 cm³/100 g to 400 cm³/100 g, alternatively 150 cm³/100 g to 300 cm³/100 g which can be suitably determined according to ASTM D 2414 or equivalent. Various commercially available silicas may be used, such as, only for example herein, and without limitation, silicas commercially available from PPG Industries under the Hi-Sil trademark with designations 210, 315G, and EZ160G; silicas available from Solvay, with, for example, designations ZeoSil 1165 MP and ZeoSil Premium 200 MP; and silicas available from Evonik AG with, for example, designations VN2 and Ultrasil 6000GR, 9100GR.

In an embodiment, the rubber composition may include carbon black. Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991 grades. These carbon blacks have iodine absorptions ranging from 9 g/kg to 145 g/kg and a DBP number ranging from 34 cm³/100 g to 150 cm³/100 g. Iodine absorption values can be suitably determined according to ASTM D1510 or equivalent. Commonly employed carbon blacks can be used as a conventional filler in an amount ranging from 10 phr to 150 phr. However, in a preferred embodiment the composition comprises at most 10 phr of carbon black, preferably at most 5 phr of carbon black, as preferred embodiments are directed to high silica compounds and the improvement of their properties.

In another embodiment, other fillers may be used in the rubber composition including particulate fillers including ultra high molecular weight polyethylene (UHMWPE), crosslinked particulate polymer gels including those disclosed in United States Patent 6,242,534, United States Patent 6,207,757, United States Patent 6,133,364, United States Patent 6,372,857, United States Patent 5,395,891, or United States Patent 6,127,488, and a plasticized starch composite filler including that disclosed in United States Patent 5,672,639. Syndiotactic polybutadiene may also be utilized. Other reinforcing fillers may be used in an amount ranging from 1 phr to 30 phr.

In one embodiment, the rubber composition may contain a conventional sulfur containing organosilicon compounds or silanes. Examples of suitable sulfur containing organosilicon compounds are of the formula:

Z - Alk - Sn - Alk - Z I

in which Z is selected from the group consisting of 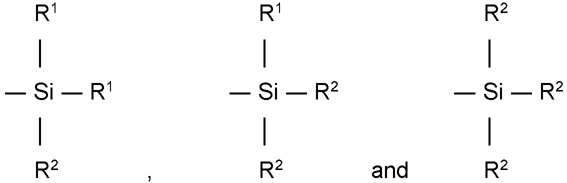 where R¹ is an alkyl group of 1 to 4 carbon atoms, cyclohexyl or phenyl; R² is an alkoxy of 1 to 8 carbon atoms, or cycloalkoxy of 5 to 8 carbon atoms; Alk is a divalent hydrocarbon of 1 to 18 carbon atoms and n is an integer of 2 to 8. In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula I, Z may be 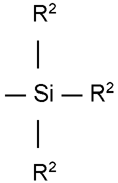 where R² is an alkoxy of 2 to 4 carbon atoms, alternatively 2 carbon atoms; Alk is a divalent hydrocarbon of 2 to 4 carbon atoms, alternatively of 3 carbon atoms; and n is an integer of from 2 to 5, alternatively 2 or 4. In another embodiment, suitable sulfur containing organosilicon compounds include compounds disclosed in United States Patent 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials. In another embodiment, suitable sulfur containing organosilicon compounds include those disclosed in United States Patent Application Publication No. 2003/0130535. In one embodiment, the sulfur containing organosilicon compound is Si-363 from Degussa. The amount of the sulfur containing organosilicon compound in a rubber composition may vary depending on the level of other additives that are used. Generally speaking, the amount of the compound may range from 0.5 phr to 20 phr. In one embodiment, the amount will range from 1 phr to 10 phr.

In another embodiment, the rubber composition comprises less than 0.1 phr of cobalt salt or 0 phr of cobalt salt.

It is readily understood by those having skill in the art that the rubber composition(s) may be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants, antiozonants and peptizing agents. As known to those skilled in the art, depending on the intended use of the sulfur vulcanizable and sulfur-vulcanized material (rubbers), the additives mentioned above are selected and commonly used in conventional amounts. Some representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may for instance be used in an amount ranging from 0.5 phr to 8 phr, alternatively with a range of from 1.5 phr to 6 phr. Typical amounts of tackifier resins, if used, comprise for example 0.5 phr to 10 phr, usually 1 phr to 5 phr. Typical amounts of processing aids, if used, comprise for example 1 phr to 50 phr (this may comprise in particular oil). Typical amounts of antioxidants, if used, may for example comprise 1 phr to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants, if used, may for instance comprise 1 phr to 5 phr. Typical amounts of fatty acids, if used, which can include stearic acid, may for instance comprise 0.5 phr to 3 phr. Typical amounts of waxes, if used, are normally employed at a level which is within the range of 1 phr to 5 phr. Often microcrystalline waxes are used. Typical amounts of peptizers, if used, are normally within the range of 0.1 phr to 1 phr. Typical peptizers may be, for example, pentachlorothiophenol and/or dibenzamidodiphenyl disulfide.

Accelerators may be preferably but not necessarily used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 phr to 4 phr, alternatively 0.8 phr to 1.5 phr. In another embodiment, combinations of a primary and a secondary accelerator might be used with the secondary accelerator being used in smaller amounts, such as from 0.05 phr to 3 phr, in order to activate and to improve the properties of the vulcanizate. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are for instance amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be for instance a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

The mixing of the rubber composition can be accomplished by methods known to those having skill in the rubber mixing art. For example, the ingredients may be typically mixed in at least two stages, namely, at least one nonproductive stage followed by a productive mix stage. The final curatives including sulfur-vulcanizing agents may be typically mixed in the final stage which is conventionally called the "productive" mix stage in which the mixing typically occurs at a temperature, or ultimate temperature, lower than the mix temperature(s) of the preceding nonproductive mix stage(s). In an embodiment, the rubber composition may be subjected to a thermomechanical mixing step. The thermomechanical mixing step generally comprises a mechanical working in a mixer or extruder for a period of time, for example suitable to produce a rubber temperature between 140°C and 190°C. The appropriate duration of the thermomechanical working varies as a function of the operating conditions, and the volume and nature of the components. For example, the thermomechanical working may be from 1 to 20 minutes.

In another embodiment the tire has a tread with one or more tread cap layers. In such an embodiment, the axially outer edge portion or outermost portion can extend essentially perpendicular to the tread cap layers and/or beside the tread cap layers. If the tread has a tread base, the axially outer edge portion, preferably also extends perpendicular to the tread base and/or beside the tread base.

Vulcanization of the pneumatic tire of the present invention may for instance be carried out at conventional temperatures ranging from 100°C to 200°C. In one embodiment, the vulcanization is conducted at temperatures ranging from 110°C to 180°C. Any of the usual vulcanization processes may be used such as heating in a press or mold, heating with superheated steam or hot air. However, it is generally preferred for the tires of this invention to be cured at a temperature ranging from 132°C to 166°C. It is more typical for the tires of this invention to be cured at a temperature ranging from 143°C to 154°C. Such tires can be built, shaped, molded and cured by various methods which are known and are readily apparent to those having skill in such art.

In another aspect of the invention, a method of building a tire is provided, preferably the tire according to the aforementioned aspect(s) and or the respective embodiments, the method comprising at least the steps of:
a) extruding a tread comprising at least one axially outer edge portion and a portion neighboring, and preferably contacting, the axially outer edge portion;
b) providing a carcass with (attached) belts and optionally one or more overlays or overlay strips;
c) attaching the tread to the carcass so as to cover the belts or optionally the one or more overlays or overlays strips;
d) attaching two sidewalls to the carcass and (partially) over the axial edges of the tread;
d) optionally, shaping the tire; and
e) curing the tire.

In general, all of the above aspects, embodiments and features thereof may be combined with one another.

### Brief Description of the Drawings

The structure, operation, and advantages of the invention will become more apparent upon contemplation of the following description taken in conjunction with the accompanying drawings, wherein
Figure 1 is a schematic cross-section of a crown portion of a prior art tire; and wherein
Figure 2 is a schematic cross-section of a crown portion of a tire in accordance with an embodiment of the invention.

### Detailed Description of Preferred Embodiments of the Invention

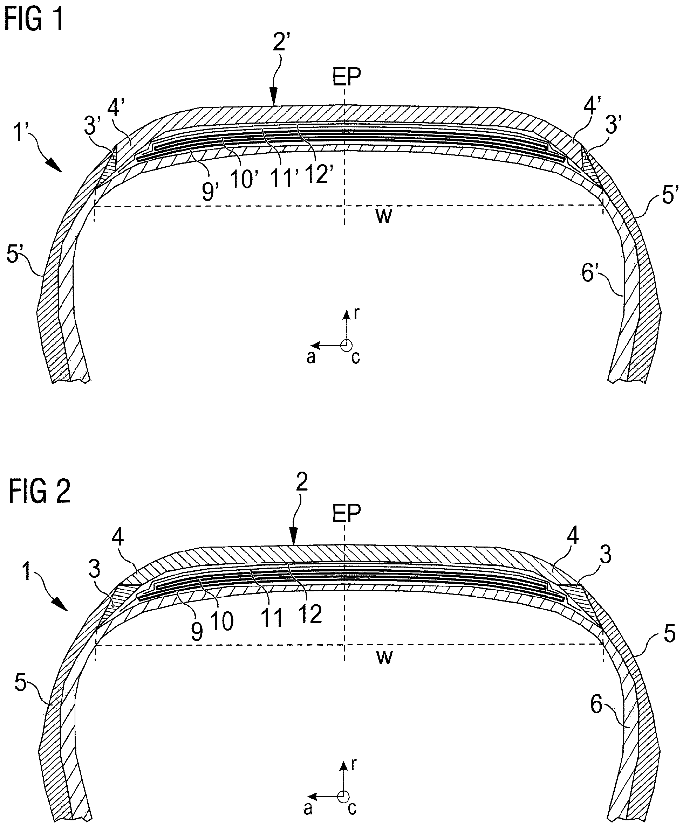

Figure 1 is a schematic cross-section of a tire 1' (not entirely in accordance with the present invention). The tire has a plurality of tire components including a tread 2', two sidewalls 5', a carcass 6', two belts 9', 10' and two overlay layers or overlays 11', 12'.

The tire 1' depicted in Figure 1 has two belts 9', 10' as for instance typically present in passenger cars. Usually, each belt 9', 10' has a metallic reinforcement. A radially inner belt 9' is broader than the radially outer belt 10', with respect to the axial direction (a) of the tire 1'.

A first radially inner overlay 12' extends axially over an axial width covering the axial outer edges of the radially outer belt 10' but not the edges of the radially inner belt 9'.

A second radially outer overlay 11' extends over an axial width larger than that of the radially inner belt 9' so as to cover the belt edge of the radially inner belt 9' and also the belt edge of the radially outer belt 10'.

The tread 2' comprises a so-called wing portion or axially outer edge portion 3' which is attached to or in contact with a neighboring tread portion 4'. The tread 2' has a total width w measured in the axial direction a, which is perpendicular to the equatorial plane (EP) of the tire 1'. The axially outer edge portion 3' may help to improve the bond between sidewall 5' and tread 2', especially with the neighboring tread portion 4'. In particular, the sidewalls 5' are laid over or cover the respective axially outer edge portion 3' of the tread 2'. Moreover, the sidewalls 5' cover the carcass 6' at the axially outer sides of the tire 1'. Such a configuration is also sometimes referred to as sidewall over tread (SOT), in contrast to tread over sidewall (TOS). As visible in Figure 1, the axially outer edge portion 3' does not cover one or more of the belts 9', 10' or is, in otherwords, axially spaced from the belts 9', 10'. Rather the belts are completely covered below the neighboring tread portion 4', which is a tread portion or tread cap portion that contacts also the ground or road when driving. In other words, the portion 4' is intended to contact the road when driving, whereas the axially outer edge portion 3' is not intended to contact the ground when driving.

The tread 2' is schematically depicted without grooves but may have one or more circumferential grooves, e.g., delimiting one or more circumferential ribs or rows of tread blocks of the tire (not shown).

In general, a tire 1' as depicted in Figure 1 may have also two opposite bead portions, including apexes and potentially further components in the bead portions which are not depicted as they are not deemed relevant in the context of the present invention. In general, such a tire may have further components not depicted herein.

The axial direction a, the radial direction r, and the circumferential direction c are shown for a better intelligibility in Figures 1 and 2. It is emphasized that the word direction is not limited as such to a certain orientation unless described otherwise herein.

One or more of the depicted components, such as the carcass, belts and overlays, may be fiber and/or fabric reinforced, either with metallic or textile reinforcements.

Figure 2 depicts an embodiment of the present invention, in which different components are described with reference signs corresponding to those of Figure 1. Thus, the tire 1 of Figure 2 has also a tread 2 having axially outer edge portions 3 and a neighboring tread portion 4, two sidewalls 5, a carcass 6, two belts or belt layers 9, 10 and two overlays 11, 12. The tread has the total axial width w measured between its actually outermost edges. It is noted that such a measurement can be carried out on a cross section of a tire along the axial direction. Axial direction is understood as directions in parallel to the direction of the axis of rotation of the tire. A radial direction is a direction perpendicular to the axis of rotation of the tire.

A main difference between the tire 1' shown in Figure 1 and the tire 1 shown in Figure 2 consists in that the axially outer edge portion 3 of tire 1 covers the axially outer edge of one of the belts (i.e., herein the axially outer edge of the radially inner belt layer 9). In other words, the axially outer edge portion 3 of the tread 2 extends to an axially inner position which is axially closer to the equatorial plane EP of the tire 1 than the axially outer edge of the radially inner belt 9. At the same time, the axially outer edge portion 3 covers also the axially outer end of the radially outer overlay 12. In this non-limiting embodiment, the axially outer edge portion 3 may also be described as wedge-shaped portion or has in other words a wedge-shaped or essentially triangular cross-section in a plane perpendicular to the equatorial plane EP of the tire 1.

The sidewall 5 of the tire 1 covers the axially outer edge portion 3 of the tread 2 or is, in other words, laid upon or over the tread 2 and the axially outer edge portion 3.

The remaining components could have the shape, properties, or function as already described herein above in relation to Figure 1.

In a preferred embodiment, the axially outer edge portion 3 of the tread 4 comprises a rubber composition which is similar to that of the sidewall. For instance, it may comprise from 30 phr to 70 phr of polyisoprene, 30 phr to 70 phr of polybutadiene and from 30 phr to 80 phr of carbon black as filler material. This would typically not be a rubber composition which is used for a tread portion intended to contact a road. At the same time, the sidewall may comprise a rubber composition having the same or a similar rubber composition comprising from 30 phr to 70 phr of polyisoprene, 30 phr to 70 phr of polybutadiene and from 30 phr to 80 phr of carbon black as filler material.

The tread 2 is depicted with only 3 portions, i.e., two axially outer edge portions 3 and a central portion or in other words the neighboring portion 4. In principle, it is possible that the central portion comprises multiple tread portions such as in a (vertical) split tread design, i.e., having at least two strips comprising different rubber compounds axially beside one another, or in other words vertically split. It is also possible, in another embodiment, to provide a tread cap with multiple horizontal (or axial) splits, e.g., multiple tread cap layers arranged radially on top of each other. In such an embodiment (not shown), the neighboring portion would be the radially outermost portion or radially outermost layer of the tread or tread cap as it is intended to contact the road when driving. Preferably, as shown in Figure 2, the neighboring portion 4 directly contacts the axially outer edge portion 3.

In an embodiment, a central tread portion and/or the neighboring portion 4 of the tread 2 may comprise a rubber composition comprising 100 phr of a diene-based elastomer and 100 phr to 250 phr of a filler, preferably comprising at least 40 phr of silica. Moreover, the rubber composition of the neighboring portion may comprise one or more traction resins or resins as listed already herein above. Preferably, the majority of the diene-based elastomer is at least one (preferably solution-polymerized) styrene-butadiene rubber, being optionally functionalized for the coupling to silica. The axially outer edge portion 3 has in the example a higher elongation at break than the neighboring portion of the tread 4 and preferably also a lower Shore A hardness and/or lower storage modulus G' which can be considered as a stiffness indicator. This is considered to provide an improved flexibility in the area covering the belt edge, in particular the radially inner belt's edge.

FEA simulations for tires having designs as shown in Figure 1 and Figure 2 showed an improved endurance of the design according to Figure 2. In particular, the areas of the axially outermost belt edges did not heat up as much as in the design according to Figure 1 when simulating the design of Figure 2.

In particular, the present sidewall over tread construction according to Figure 1 results in a reduced endurance compared to a sidewall under tread construction as it has less flexible or soft material between the tread and the belt edge. According to a non-binding theory, the enlarged axially outer edge portion 3 of the tread 2 according to Figure 2 helps to exert less stress on the belt edges (compared to the design according to Figure 1) which results in a reduced heat generation and limits the risk of failures.

Moreover, test tires have been built for each design as shown in Figure 1 (prior art) and Figure 2 (embodiment of the invention) in the size 255/35 ZR 20. An endurance test over more than ten thousand kilometers and under high load was run. This test confirmed the FEA results in that the design according to Figure 2 did not show failures in the belt edge area.

## Claims

1. A tire comprising a tread (2), sidewalls (5), a carcass (6) and at least two belt layers (9, 10) arranged radially between the carcass (6) and the tread (2) in a crown area of the tire (1), wherein the tread (2) has at least one axially outer edge portion (3) radially covering an axially outermost edge of at least one of the belt layers (9, 10) and having a rubber composition different from the rubber composition of a neighboring portion of the tread (2), wherein the neighboring portion is adapted to be ground-contacting, wherein one of the sidewalls (5) or a respective sidewall (5) at least partially covers and contacts an axially outer surface of the axially outer edge portion (3) of the tread (2), and wherein the rubber composition of the axially outer edge portion (3) has an elongation at break of at least 500%, wherein elongation at break is determined by a ring sample test based on ASTM D412 or equivalent, **characterized in that** the rubber composition of the axially outer edge portion (3) has an elongation at break which is at least 10% higher than the elongation at break of the rubber composition of the neighboring portion of the tread (2) and **in that** rubber composition of the axially outer edge portion (3) comprises at least 25 phr of polybutadiene rubber, at least 30 phr of polyisoprene rubber, and at least 20 phr of carbon black.

2. The tire according to claim 1, wherein the axially outer edge portion (3) extends axially over from 1% to 20% or from 2% to 8% of the total width of the tread.

3. The tire according to claim 1 or 2, wherein the axially outer edge portion (3) has an essentially triangular cross-section in a plane perpendicular to the equatorial plane of the tire (1), wherein a first side of the essentially triangular cross-section contacts the neighboring portion of the tread (2), wherein a second side of the essentially triangular cross-section at least partially covers the axially outermost edge of at least one of the belt layers (9, 10), and wherein a third side of the essentially triangular cross-section contacts the sidewall (5).

4. The tire according to claim 3, wherein the second side further covers one or more of a portion of the carcass (6).

5. The tire according to at least one of the previous claims, wherein the axially outer edge portion (3) or the second side the axially outer edge portion (3) covers the axially outermost edge of the radially inner belt layer (9) but not the axially outermost edge of the radially outer belt layer (10).

6. The tire according to at least one of the previous claims, wherein the axially outer edge portion (3) comprises a rubber composition comprising at least 30 phr of polybutadiene rubber, at least 30 phr of polyisoprene rubber, and at least 20 phr of carbon black; and/or wherein the sidewall comprises a rubber composition comprising at least 30 phr of a polybutadiene rubber, at least 30 phr of polyisoprene rubber, and at least 20 phr of carbon black but different from the rubber composition of the axially outer edge portion (3).

7. The tire according to at least one of the previous claims, wherein the neighboring portion of the tread (2) comprises a rubber composition comprising at least 50 phr of at least one styrene-butadiene rubber and at least 100 phr of filler.

8. The tire according to at least one of the previous claims, wherein a rubber composition of at least one of (i) the sidewall (5) and (ii) the axially outer edge portion (3) has at least one of:
(a) a Shore A hardness of less than 55, and (b) a Shore A hardness which is at least 5% lower than the Shore A hardness of a rubber composition of the neighboring portion of the tread (2).

9. The tire according to at least one of the previous claims, comprising one axially outer edge portion (3) at each axial side of the tread (2), wherein each axially outer edge portion (3) is covered by a respective sidewall (5), and wherein the axially outer edge portions (3) do not touch each other and each extend together over less than 20% of the total width of the tread (2).

10. The tire according to at least one of the previous claims, wherein the axially outermost edge of at least one of the belt layers (9, 10) is covered by at least one of an overlay (11, 12) and one or more overlay strips.

11. The tire according to at least one of the previous claims, wherein the sidewall (5) extends over at least 80% of the radial height of the axially outer edge portion (3).

12. The tire according to at least one of the previous claims, wherein the axially outer edge portion (3) covers (i) at least an axially outer edge of a radially inner belt layer (9), (ii) an axially outermost portion of the overlay (11, 12) or overlay strips, and, optionally, (iii) a carcass portion axially outwards the axially outermost portion of the overlay (11, 12) or overlay strips.

13. The tire according to at least one of the previous claims, wherein the axially outer edge portion (3) extends to a radially outermost position which is radially below the radially innermost surface of the tread (2) in the equatorial plane (EP) of the tire (1)

14. The tire according to at least one of the previous claims, wherein the axially outer edge portion (3) tapers in an axially outer and radially inner direction.

## Patentansprüche

1. Luftreifen, der eine Lauffläche (2), Seitenwände (5), eine Karkasse (6) und mindestens zwei Gürtelschichten (9, 10) umfasst, die in der radialen Richtung zwischen der Karkasse (6) und der Lauffläche (2) in einem Zenitbereich des Reifens (1) angeordnet sind; wobei die Lauffläche (2) mindestens einen Abschnitt (3) in der Form einer in der axialen Richtung äußeren Kante aufweist, der in der radialen Richtung einen in der axialen Richtung äußersten Rand mindestens einer der Gürtelschichten (9, 10) überlappt, und der eine Kautschukzusammensetzung aufweist, die sich von der Kautschukzusammensetzung des benachbarten Abschnitts der Lauffläche (2) unterscheidet; wobei der benachbarte Abschnitt dazu ausgelegt ist, den Boden zu berühren; wobei eine der Seitenwände (5) oder eine entsprechende Seitenwand (5) eine Außenfläche in der axialen Richtung des Abschnitts (3) der Lauffläche (2) in der Form einer in der axialen Richtung äußeren Kante zumindest teilweise bedeckt und berührt; und wobei die Kautschukzusammensetzung des Abschnitts (3) der Lauffläche (2), in der Form einer in der axialen Richtung äußeren Kante eine Bruchdehnung aufweist, die mindestens 500 % beträgt; wobei die Bruchdehnung durch einen Test bestimmt wird, der an einer ringförmigen Probe auf der Grundlage von ASTM D412 oder einem Äquivalent durchgeführt wird; **dadurch gekennzeichnet, dass** die Kautschukzusammensetzung des Abschnitts (3) der Lauffläche (2) in der Form einer in der axialen Richtung äußeren Kante eine Bruchdehnung aufweist, die um mindestens 10 % größer ist als die Bruchdehnung der Kautschukzusammensetzung des benachbarten Abschnitts der Lauffläche, und dass die Kautschukzusammensetzung des Abschnitts (3) der Lauffläche (2) in der Form einer in der axialen Richtung äußeren Kante mindestens 25 ThK eines Polybutadienkautschuks, mindestens 30 ThK eines Polyisoprenkautschuks und mindestens 20 ThK Ruß umfasst.

2. Luftreifen nach Anspruch 1, wobei der Abschnitt (3) in der Form einer in der axialen Richtung äußeren Kante sich in der axialen Richtung über eine Strecke erstreckt, die von 1 % bis 20 % oder von 2 % bis 8 % der Gesamtbreite der Lauffläche ausmacht.

3. Luftreifen nach Anspruch 1 oder 2, wobei der Abschnitt (3) in der Form einer in der axialen Richtung äußeren Kante in einer Ebene senkrecht zu der Äquatorebene des Reifens (1) einen eine im Wesentlichen dreieckige Form aufweisenden Querschnitt hat; wobei eine erste Seite des eine im Wesentlichen dreieckige Form aufweisenden Querschnitts den benachbarten Abschnitt der Lauffläche (2) berührt; und wobei eine zweite Seite des eine im Wesentlichen dreieckige Form aufweisenden Querschnitts den benachbarten Abschnitt der Lauffläche (2) berührt; wobei eine zweite Seite des eine im Wesentlichen dreieckige Form aufweisenden Querschnitts zumindest teilweise die in der axialen Richtung äußerste Kante von mindestens einer der Gürtelschichten (9, 10) überlappt; und wobei die dritte Seite des eine im Wesentlichen dreieckige Form aufweisenden Querschnitts die Seitenwand (5) berührt.

4. Luftreifen nach Anspruch 3, wobei die zweite Seite zusätzlich einen Teil oder mehr als einen Teil der Karkasse (6) bedeckt.

5. Luftreifen nach mindestens einem der vorhergehenden Ansprüche, wobei der Abschnitt (3) in der Form einer in der axialen Richtung äußeren Kante oder die zweite Seite des Abschnitts (3) in der Form einer in der axialen Richtung äußeren Kante die in der axialen Richtung äußerste Kante der in der radialen Richtung inneren Gürtelschicht (9) überlappt, aber nicht die in der axialen Richtung äußerste Kante der in der axialen Richtung äußeren Gürtelschicht (10) überlappt.

6. Luftreifen nach mindestens einem der vorhergehenden Ansprüche, wobei der Abschnitt (3) in der Form einer in der axialen Richtung äußeren Kante eine Kautschukzusammensetzung umfasst, die mindestens 30 ThK eines Polybutadienkautschuks, mindestens 30 ThK eines Polyisoprenkautschuks und mindestens 20 ThK Ruß umfasst; und/oder die Seitenwand eine Kautschukzusammensetzung umfasst, die mindestens 30 ThK eines Polybutadienkautschuks, mindestens 30 ThK eines Polyisoprenkautschuks und mindestens 20 ThK Ruß umfasst, die sich aber von der Kautschukzusammensetzung des Abschnitts (3) in der Form einer in der axialen Richtung äußeren Kante unterscheidet.

7. Luftreifen nach mindestens einem der vorhergehenden Ansprüche, wobei der benachbarte Abschnitt der Lauffläche (2) eine Kautschukzusammensetzung umfasst, die mindestens 50 ThK eines Kautschuks, der aus Styrol-Butadien besteht, und mindestens 100 ThK eines Füllstoffs umfasst.

8. Luftreifen nach mindestens einem der vorhergehenden Ansprüche, wobei eine Kautschukzusammensetzung aufweist, die aus mindestens einem von (i) der Seitenwand (5) und (ii) dem Abschnitt (3) in der Form einer in der axialen Richtung äußeren Kante besteht, mindestens ein Merkmal aufweist, das ausgewählt ist aus:
(a) einer Shore-A-Härte, die kleiner als 55 ist, und (b) einer Shore-A-Härte, die mindestens 5 % kleiner ist als die Shore-A-Härte einer Kautschukzusammensetzung des benachbarten Abschnitts der Lauffläche (2).

9. Luftreifen nach mindestens einem der vorhergehenden Ansprüche, wobei der Luftreifen einen Abschnitt (3) in der Form einer in axialer Richtung äußeren Kante an jeder axialen Seite der Lauffläche (2) aufweist; wobei jeder Abschnitt (3) in der Form einer in axialer Richtung äußeren Kante durch eine jeweilige Seitenwand (5) abgedeckt ist; und wobei die Abschnitte (3) in der Form in der axialen Richtung äußere Kanten einander nicht berühren und wobei sie sich jeweils über eine Strecke von weniger als 20 % der Gesamtbreite der Lauffläche (2) erstrecken.

10. Luftreifen nach mindestens einem der vorhergehenden Ansprüche, wobei die in der axialen Richtung äußerste Kante mindestens einer der Gürtelschichten (9, 10) mit mindestens einem aus einem Nylongürtel (11, 12) und einem oder mehreren Nylonstreifen bedeckt ist.

11. Luftreifen nach mindestens einem der vorhergehenden Ansprüche, wobei die Seitenwand (5) sich über mindestens 80% der radialen Höhe des Abschnitts (3) in der Form einer in der axialen Richtung äußeren Kante erstreckt.

12. Luftreifen nach mindestens einem der vorhergehenden Ansprüche, wobei der Abschnitt (3) in der Form einer in der axialen Richtung äußeren Kante (i) mindestens eine in der axialen Richtung äußere Kante einer in der radialen Richtung inneren Gürtelschicht (9), (ii) einen in der axialen Richtung äußersten Abschnitt des Nylongürtels (11, 12) oder der Nylonstreifen, und optional (iii) einen Abschnitt der Karkasse in der axialen Richtung nach außen von dem äußersten Abschnitt in der axialen Richtung des Nylongürtels (11, 12) oder der Nylonstreifen bedeckt.

13. Luftreifen nach mindestens einem der vorhergehenden Ansprüche, wobei der Abschnitt (3) in der Form einer in der axialen Richtung äußeren Kante sich bis zu einer in der radialen Richtung am weitesten entfernten Stelle erstreckt, die in der radialen Richtung unterhalb der in der radialen Richtung innersten Oberfläche der Lauffläche (2) in der Äquatorialebene (EP) des Reifens (1) angebracht ist.

14. Luftreifen nach mindestens einem der vorhergehenden Ansprüche, wobei der Abschnitt (3) in der Form einer in der axialen Richtung äußeren Kante sich in der axialen Richtung nach außen und in der radialen Richtung nach innen verjüngt.

## Revendications

1. Bandage pneumatique qui comprend une bande de roulement (2), des flancs (5), une carcasse (6) et au moins deux couches de ceintures (9, 10) qui sont disposées, dans la direction radiale, entre la carcasse (6) et la bande de roulement (2) dans une zone de sommet du bandage pneumatique (1); dans lequel la bande de roulement (2) possède au moins une portion (3) sous la forme d'un bord externe dans la direction axiale, qui recouvre, dans la direction radiale, un bord le plus externe dans la direction axiale, d'au moins une des couches de ceintures (9, 10), et qui possède une composition de caoutchouc qui est différente de la composition de caoutchouc de la portion voisine de la bande de roulement (2) ; dans lequel la portion voisine est conçue pour entrer en contact avec le sol ; dans lequel un des flancs (5) ou un flanc respectif (5) recouvre et entre en contact au moins en partie avec une surface externe, dans la direction axiale, de la portion (3) de la bande de roulement (2) sous la forme d'un bord externe dans la direction axiale ; et dans lequel la composition de caoutchouc de la portion (3) de la bande de roulement (2) sous la forme d'un bord externe dans la direction axiale, possède un allongement à la rupture qui représente au moins 500 % ; dans lequel l'allongement à la rupture est déterminé par un test réalisé sur un échantillon annulaire en se basant sur la norme ASTM D412 ou équivalent ; **caractérisé en ce que** la composition de caoutchouc de la portion (3) de la bande de roulement (2) sous la forme d'un bord externe dans la direction axiale possède un allongement à la rupture qui est supérieur à concurrence d'au moins 10 % à l'allongement à la rupture de la composition de caoutchouc de la portion voisine de la bande de roulement, et **en ce que** la composition de caoutchouc de la portion (3) de la bande de roulement (2) sous la forme d'un bord externe dans la direction axiale comprend au moins 25 phr d'un caoutchouc de polybutadiène, au moins 30 phr d'un caoutchouc de polyisoprène et au moins 20 phr de noir de carbone.

2. Bandage pneumatique selon la revendication 1, dans lequel la portion (3) sous la forme d'un bord externe dans la direction axiale s'étend, dans la direction axiale sur une distance qui représente de 1 % à 20 % ou de 2 % à 8 % de la largeur totale de la bande de roulement.

3. Bandage pneumatique selon la revendication 1 ou 2, dans lequel la portion (3) sous la forme d'un bord externe dans la direction axiale possède une section transversale de forme essentiellement triangulaire dans un plan perpendiculaire au plan équatorial du bandage pneumatique (1) ; dans lequel un premier côté de la section transversale de forme essentiellement triangulaire entre en contact avec la portion voisine de la bande de roulement (2) ; dans lequel un deuxième côté de la section transversale de forme essentiellement triangulaire recouvre au moins en partie le bord le plus externe, dans la direction axiale, d'au moins une des couches de ceintures (9, 10) ; et dans lequel le troisième côté de la section transversale de forme essentiellement triangulaire entre en contact avec le flanc (5).

4. Bandage pneumatique selon la revendication 3, dans lequel le deuxième côté recouvre en outre une portion ou plus d'une portion de la carcasse (6).

5. Bandage pneumatique selon au moins une des revendications précédentes, dans lequel la portion (3) sous la forme d'un bord externe dans la direction axiale ou le deuxième côté de la portion (3) sous la forme d'un bord externe dans la direction axiale recouvre le bord le plus externe, dans la direction axiale, de la couche de ceinture (9) interne dans la direction radiale, mais non le bord le plus externe, dans la direction axiale, de la couche de ceinture (10) externe dans la direction radiale.

6. Bandage pneumatique selon au moins une des revendications précédentes, dans lequel la portion (3) sous la forme d'un bord externe dans la direction axiale comprend une composition de caoutchouc qui comprend au moins 30 phr d'un caoutchouc de polybutadiène, au moins 30 phr d'un caoutchouc de polyisoprène, et au moins 20 phr de noir de carbone ; et/ou le flanc comprend une composition de caoutchouc qui comprend au moins 30 phr d'un caoutchouc de polybutadiène, au moins 30 phr d'un caoutchouc de polyisoprène, et au moins 20 phr de noir de carbone, mais qui est différente de la composition de caoutchouc de la portion (3) sous la forme d'un bord externe dans la direction axiale.

7. Bandage pneumatique selon au moins une des revendications précédentes, dans lequel la portion voisine de la bande de roulement (2) comprend une composition de caoutchouc qui comprend au moins 50 phr d'au moins un caoutchouc de styrène-butadiène et au moins 100 phr d'une matière de charge.

8. Bandage pneumatique selon au moins une des revendications précédentes, dans lequel une composition de caoutchouc d'au moins un élément choisi parmi (i) le flanc (5) et (ii) la portion (3) sous la forme d'un bord externe dans la direction axiale possède au moins une des caractéristiques choisie parmi :
(a) une dureté Shore A qui est inférieure à 55, et (b) une dureté Shore A qui est inférieure à concurrence d'au moins 5 % à la dureté Shore A d'une composition de caoutchouc de la portion voisine de la bande de roulement (2).

9. Bandage pneumatique selon au moins une des revendications précédentes, qui comprend une portion (3) sous la forme d'un bord externe dans la direction axiale sur chaque côté axial de la bande de roulement (2) ; dans lequel chaque portion (3) sous la forme d'un bord externe dans la direction axiale est recouverte par flanc respectif (5) ; et dans lequel les portions (3) sous la forme de bords externes dans la direction axiale ne se touchent pas l'une l'autre et dans lequel elles s'étendent respectivement sur une distance qui représente moins de 20 % de la largeur totale de la bande de roulement (2).

10. Bandage pneumatique selon au moins une des revendications précédentes, dans lequel le bord le plus externe, dans la direction axiale, d'au moins une des couches de ceintures (9, 10) est recouvert par au moins un élément choisi parmi une nappe de protection (11, 12) et une ou plusieurs bandes de protection.

11. Bandage pneumatique selon au moins une des revendications précédentes, dans lequel le flanc (5) s'étend sur au moins 80 % de la hauteur radiale de la portion (3) sous la forme d'un bord externe dans la direction axiale.

12. Bandage pneumatique selon au moins une des revendications précédentes, dans lequel la portion (3) sous la forme d'un bord externe dans la direction axiale recouvre (i) au moins un bord externe, dans la direction axiale, d'une couche de ceinture (9) interne dans la direction radiale, (ii) une portion la plus externe, dans la direction axiale, de la nappe de protection (11, 12) ou des bandes de protection, et, de manière facultative, (iii) une portion de carcasse vers l'extérieur, dans la direction axiale, de la portion la plus externe, dans la direction axiale, de la nappe de protection (11, 12) ou des bandes de protection.

13. Bandage pneumatique selon au moins une des revendications précédentes, dans lequel la portion (3) sous la forme d'un bord externe dans la direction axiale s'étend jusqu'à un endroit le plus éloigné dans la direction radiale, qui est situé en-dessous, dans la direction radiale, de la surface la plus interne, dans la direction radiale, de la bande de roulement (2) dans le plan équatorial (EP) du bandage pneumatique (1).

14. Bandage pneumatique selon au moins une des revendications précédentes, dans lequel la portion (3) sous la forme d'un bord externe dans la direction axiale se rétrécit vers l'extérieur dans la direction axiale et vers l'intérieur dans la direction radiale.
